# FASCICULE DE BREVET EUROPEEN

(11) **EP 1 177 850 B1**
(45) Date de publication et mention de la délivrance du brevet: **25.02.2004**
(21) Numéro de dépôt: 00202767.0
(22) Date de dépôt: 04.08.2000
(51) Int. Cl.: B23K 7/00, B22D 11/126, B23K 37/04

(54) **Oxycoupage de brames**
Brammenbrennschneiden
Slabs oxy-cutting

(43) Date de publication de la demande: 06.02.2002
(73) Titulaire: Eon Holding SA, 2450 Luxembourg (LU)
(72) Inventeur: Donze, Valérie, 54520 Laxou (FR); Donze, Bertrand, 55100 Dugny (FR); Donze,Pascal, 54000 Nancy (FR); Rozot, Thierry, 54115 Thorey Lyautey (FR)
(74) Mandataire: Waxweiler, Jean

(56) Documents cités:
- EP-A- 0 827 920
- DE-A- 19 823 582
- FR-A- 2 746 686
- US-A- 5 198 178

## Description

L'invention concerne un procédé d'oxycoupage de brames et un dispositif de mise en oeuvre du procédé.

Il est usuel d'oxycouper des brames de grandes dimensions issues de coulée continue pour en faire des brames plus petites correspondant à des programmes de laminage spécifique.

Les grandes brames dénommées brames mères peuvent être coupées:
a) longitudinalement par une opération appelée refendage en x brames de même longueur;
b) longitudinalement par une opération appelée dérivage pour éliminer les rives (défauts); et
c) transversalement par une opération appelée débit.

Ces travaux d'oxycoupage entraînent beaucoup de manutentions, de nuisances, et de surfaces de travail très chères car équipées de moyens importants de manutention, de génie civil et de supports solides, ce qui oblige à concentrer ces travaux sur des chantiers dits d'oxycoupage.

Il est connu de réaliser des chantiers d'oxycoupage posant les brames à couper de différentes façons:
- à plat sur supports fixes avec des chalumeaux mobiles
- à plat ou sur rives en mouvement sur un train de rouleaux avec des chalumeaux fixes (Voir le document FR-A-2 746 686, qui représente l'état de la technique le plus proche).

Toutes les solutions existantes à ce jour de par le monde sont pénalisées par des nuisances (scories, fumées), des frais de supports et surtout l'enlèvement des cordons, etc.

Le but de l'invention est de supprimer les pénalités décrites plus haut.

Selon l'invention, ce but est réalisé par les caractéristiques du procédé d'oxycoupage et le dispositif de mise en oeuvre audit procédé selon les revendications indépendantes. Des modes de réalisation de l'invention sont décrites dans les revendications dépendantes.

Bref, le procédé d'oxycoupage de brame selon l'invention consiste à suspendre la brame en oxycoupage par des électro-aimants d'un moyen porteur, tel que semi-portique, portique ou pont roulant ou encore dispositif spécialement conçu, pour déplacer la brame suspendue contre les rouleaux motorisés ou tout autre moyen mécanique d'entraînement devant des chalumeaux et buses (d'ébavurage, de granulation et d'aspiration) fixes répartis de part et d'autre de la brame d'une machine d'oxycoupage.

Pour les brames déplacées à plat le ou les chalumeaux est ou sont coudés et placés sous la brame. Ils coupent de bas en haut pour permettre un positionnement plus facile de l'ébavurage, granulation et aspiration. On peut également positionner inversement.

Pour les brames déplacées en position verticale, le placement des chalumeaux et systèmes (ébavureur, granuleur, aspirateurs) est plus aisé et les contrôles plus faciles.

Ce système est adaptable aux moyens de manutentions existants dans l'usine, comme il peut être spécialement construit au dessus d'une aire de stockage des brames qu'il peut à la fois manutentionner et couper.

Il permet de concevoir des machines avec brames en position verticale suspendues à la rive offrant un accès très facile de part et d'autre pour couper et ébavurer, mais aussi de traiter les brames en position horizontale avec des chalumeaux coudés permettant de couper de bas en haut afin de placer aisément les dispositifs de granulation des scories et d'évacuation.

Le principe de déplacement de la brame en suspension magnétique sur la rive permet de traiter des brames déformées. La base des cotes de la brame est constante (droite tangente aux rouleaux) ce qui permet de cadrer sans risque d'erreur ni temps perdu le programme d'oxycoupage et le positionnement des chalumeaux, des ébavureurs, etc.

Le principe de fonctionnement permet une très grande productivité du chantier d'oxycoupage, car il n'y a pas de temps morts pour aucune opération de manutention, nettoyage, etc. L'approvisionnement des brames à découper et le départ des brames coupées sont réalisés en temps masqués. Contrairement à toutes les autres installations connues, il n'y a aucun arrêt de production pour le nettoyage du chantier grâce à la possibilité d'accès permettant d'éviter la formation des bavures et d'évacuer les scories au fur et à mesure de leur production.

L'invention sera maintenant décrite à titre d'exemples non-limitatifs représentés dans les dessins annexés dans lesquels:
les figures 1A et 1B sont des représentations schématiques en élévation et en projection verticale, respectivement, d'un mode de réalisation de l'invention représentant l'oxycoupage d'une brame en position horizontale;
les figures 2A et 2B sont des représentations schématiques en perspective et en projection verticale, respectivement, d'un autre mode de réalisation de l'invention représentant l'oxycoupage d'une brame en position verticale;
la figure 3 est une représentation schématique d'une installation plus complète de mise en oeuvre de l'oxycoupage de brames selon l'invention à l'exemple d'une brame en position horizontale; et
la figure 4 est une représentation de la manutention d'une brame de sa position de stockage horizontale dans la position de travail verticale.

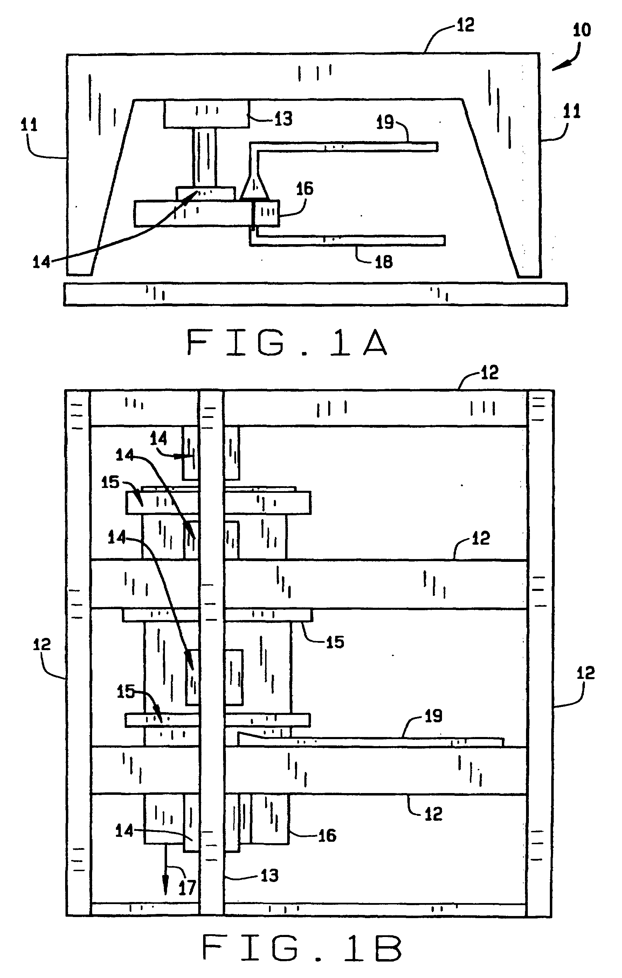

A la figure 1 on trouve représenté un mode de réalisation d'oxycoupage de brames selon l'invention en position horizontale. Une structure porteuse 10 en forme de pieux 11 et traverses 12 porte un élément porteur 13 auquel sont suspendus par des câbles, vérins ou autre moyen des électro-aimants 14 et des rouleaux d'entraînements motorisés 15 pour les brames. Les rouleaux 15 alternent avec les électro-aimants 14. La brame 16 est portée par un ou plusieurs électro-aimants 14 en service suivant sa position le long du chemin de travail indiqué par une flèche 17. Les rouleaux motorisés 15 touchent la brame 16 et sont entraînés en rotation pour déplacer la brame 16 par frottement. Les rouleaux motorisés 15 peuvent aussi être aimantés par un aimant permanent ou un électro-aimant réglable non représenté.

Sur son chemin de travail indiqué par la flèche 17, la brame 16 passe entre un chalumeau d'oxycoupage 18, coudé dans la figure 1, et un dispositif 19 d'évacuation de fumé et de scorie et/ou d'ébavurage. Si le dispositif a les trois fonctions, des morceaux de brame finis sont obtenus lorsque la brame 16 et passée entièrement devant le chalumeau 18.

Selon les besoins, c-à-d selon les largeurs des pièces de brame découpées, deux ou plus de chalumeaux 18 et dispositifs 19 peuvent être utilisés.

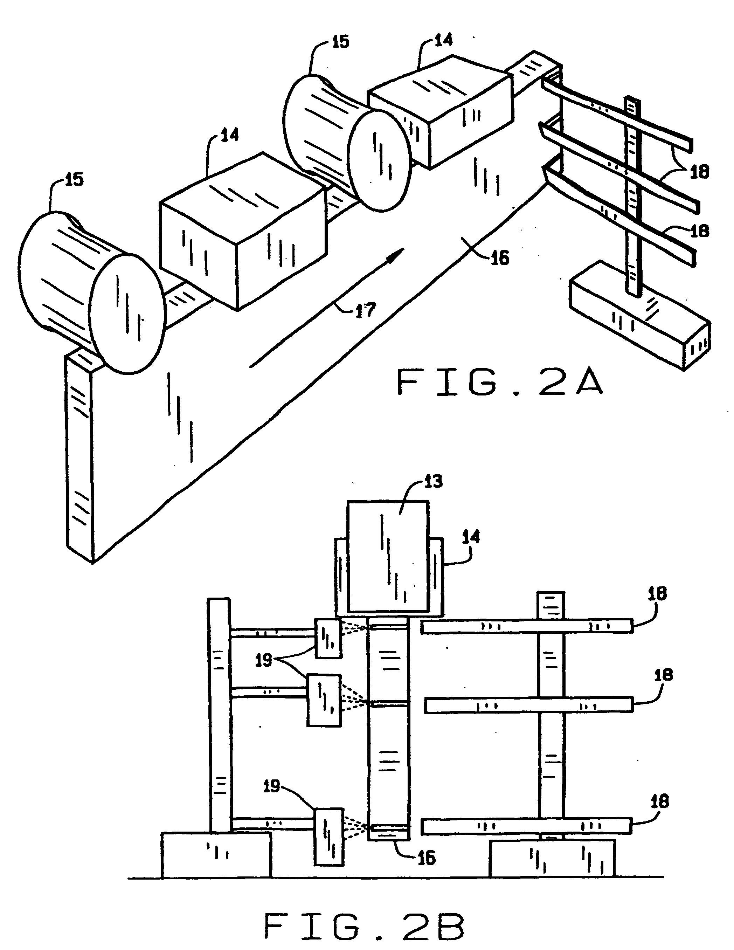

Les figures 2A et 2B représentent, d'une manière schématique en perspective et en élévation l'oxycoupage d'une brame 16 en position verticale suspendue à des électro-aimants 14 et entraînée par des rouleaux motorisés 15 dans la direction de la flèche 17. La brame 16 en position verticale passe entre les chalumeaux 18 et les dispositifs 19 d'évacuation de fumé et de scories et d'ébavurage.

Pour les deux façons de transporter la brame 16, c-à-d en position horizontale ou à plat et en position verticale, la coopération entre les électro-aimants 14 et les rouleaux motorisés 15, c-à-d positionnement des rouleaux motorisés 15 de telle sorte qu'un espace d'air est formé entre la surface de l'électro-aimant et la face contiguë de la brame 18, permet un déplacement facile de la brame 16 dans le sens de la flèche 17.

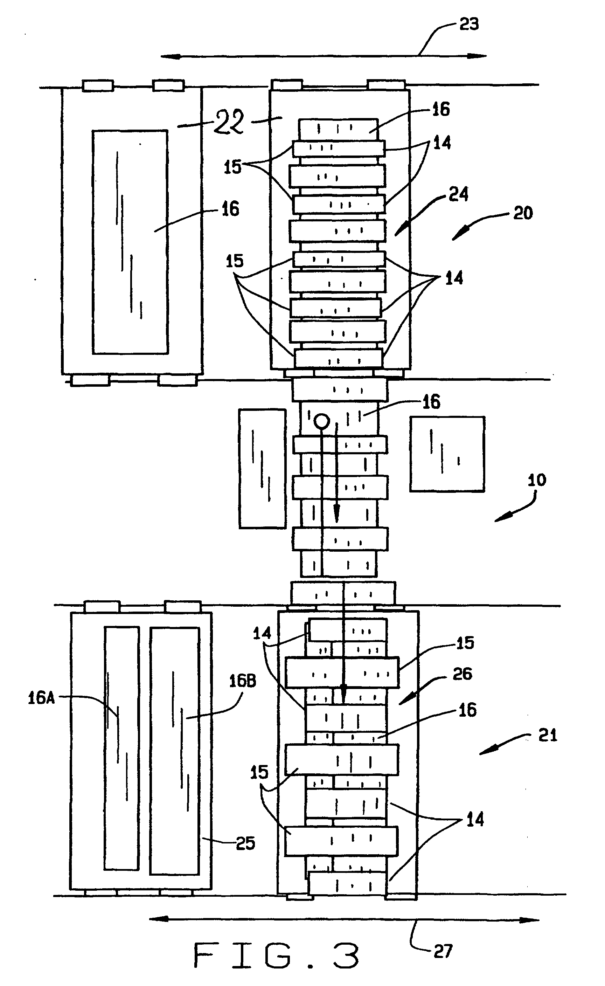

La figure 3 représente de façon schématique une installation complète d'oxycoupage de brames avec au centre la structure ou endroit de coupage 10, en haut l'unité d'alimentation 20 des brames 16 et en bas l'unité d'évacuation 21 des brames 16.

L'unité d'alimentation 20 comprend un chariot 22 se déplaçant dans le sens de la flèche double 23 pour amener les brames 16 à couper et une installation 24 de support et de transport des brames 16 vers l'endroit d'oxycoupage 10. Cette installation 24 comprend des électro-aimants 14 et des rouleaux motorisés 15 alternant le long de la direction de transport vers l'endroit d'oxycoupage; tout ceci est similaire aux électro-aimants et rouleaux décrits en relation avec la figure 1.

L'unité d'évacuation 21 des brames 16 comprend également un chariot 25 mobile dans le sens de la double flèche 27 pour le transport des brames coupées 16A, 16B et une installation 26 de support et de transport des brames 16 hors de l'endroit d'oxycoupage. Cette installation 24 comprend aussi des électro-aimants 14 et des rouleaux motorisés 15, comme l'installation 24, alternant le long de la direction de transport pour transporter les brames découpées hors de la zone d'oxycoupage.

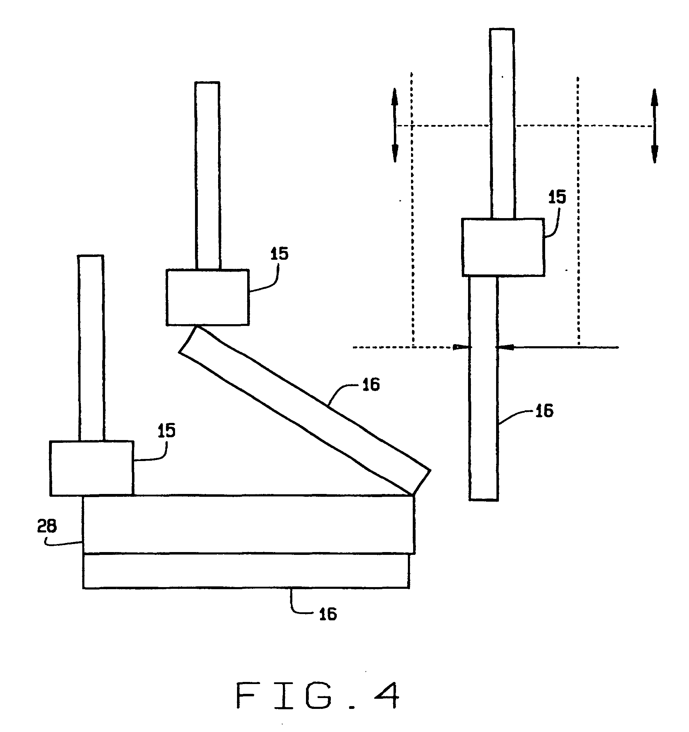

Si les brames 16 sont coupées en position verticale, les brames 16 à couper peuvent être empilées dans l'installation d'alimentation 20 sur un chariot amenant le bord 28 de la brame 16 supérieure de la pile de brames formée sur le chariot sous les électro-aimants 14 qui, en service, se collent à cheval sur le bord 28 de la brame supérieure 16. Les électro-aimants 14 montent pendant que le chariot se déplace latéralement suivant un mouvement programmé sur le déplacement vertical des électro-aimants 14. Ceci permet à la brame 16 d'être soulevée en pivotant sur le bord 28 pour venir se coller en position verticale pour l'oxycoupage. La suite de l'opération est identique à celle qui vient d'être décrite pour la brame en position verticale. Dans l'installation d'évacuation le dépôt des brames 16 découpées sur une pile a lieu dans la suite inverse des mouvements lors de l'alimentation représentée à la figure 4. Le levage des brames décrit peut également être réalisé en gardant la pile de brames 16 immobile, mais en déplaçant latéralement l'ensemble de l'installation 24 de support et de transport de brame 16 et des électro-aimants 14 jusqu'à ce que les électro-aimants 14 se trouvent à l'endroit du bord 28 de la brame 16 supérieure de la pile de brames. L'opération de levage se fait alors par un mouvement latéral de l'installation programmé pour le déplacement vertical des électro-aimants 14.

## Revendications

1. Procédé d'oxycoupage de brames à l'aide d'un ou plusieurs chalumeaux d'oxycoupage, **caractérisé en ce qu'**il comprend les étapes de suspendre la brame (16) à l'aide d'un ou plusieurs électro-aimants (14) séparé de la brame (16) par un moyen non-magnétique, de réaliser un mouvement relatif entre les chalumeaux (18) et la brame (16) à l'aide d'un moyen transporteur (15) agissant sur la brame du même côté de la brame (16) que ledit électro-aimant (14), et de mettre en marche ledit chalumeau (18) pour couper la brame (16) lors de son passage devant le chalumeau (18).

2. Procédé d'oxycoupage selon la revendication 1, **caractérisé en ce que** ledit moyen transporteur (15) est un rouleau moteur à axe perpendiculaire à la direction de transport contactant la brame (16).

3. Procédé d'oxycoupage selon la revendication 2, **caractérisé en ce que** ledit moyen non-magnétique est de l'air.

4. Procédé d'oxycoupage selon la revendication 2 ou 3, **caractérisé en ce que** lesdits rouleaux moteurs (15) sont aimantés.

5. Procédé d'oxycoupage selon la revendication 2 ou 3, **caractérisé en ce que** lesdits rouleaux moteurs (15) sont des électro-aimants.

6. Dispositif d'oxycoupage convenant à la mise en oeuvre du procédé selon la revendication 1, comprenant une structure (10) porteuse de brame (16) et au moins un chalumeau d'oxycoupage (18), **caractérisé par** un ou plusieurs électro-aimant (14) fixé à ladite structure porteuse (10) et alignée dans la direction de transport de brame (16) permettant de suspendre une brame au-dessus du sol, un ou plusieurs rouleau moteur (15) disposé en direction de transport des brames (16) avec son axe perpendiculaire à ladite direction de transport pour entrer en contact avec ladite brame (16) pour la déplacer devant ledit chalumeau (18), et un moyen non-magnétique adjacent à chaque électro-aimant (14) et destiné à garder une certaine distance entre l'électro-aimant (14) et une brame (16).

7. Dispositif selon la revendication 6, **caractérisé par** un moyen à ébavurer (19) en face du chalumeau d'oxycoupage (18), la brame (16) étant interposée pendant l'opération d'oxycoupage entre ledit moyen à ébavurer et ledit chalumeau (18).

8. Dispositif selon la revendication 6 ou 7, **caractérisé par** un moyen de granulation de scories (19) en face du chalumeau d'oxycoupage (18), la brame (16) étant interposée pendant l'opération d'oxycoupage entre ledit moyen de granulation et ledit chalumeau (18).

9. Dispositif selon une des revendications 6 à 8, **caractérisé par** un moyen d'évacuation de fumée (19) en face du chalumeau d'oxycoupage (18), la brame (16) étant interposée pendant l'opération d'oxycoupage entre ledit moyen d'évacuation et ledit chalumeau (18).

## Patentansprüche

1. Brennschneideverfahren für Brammen mit Hilfe eines oder mehrere Schneidbrenner, **gekennzeichnet durch** die Verfahrenschritte: Aufhängen der Bramme (16) mittels eines oder mehrerer Elektromagnete (14), welche von der Bramme **durch** ein nicht magnetisches Mittel getrennt sind, Ausführen einer Relativbewegung zwischen den Brennern (18) und der Bramme (6) mit Hilfe einer Transportvorrichtung (15), welche auf der gleichen Seite auf die Bramme (16) einwirkt, wie der Elektromagnet (14), und in Gang bringen des Brenners (18) zum Schneiden der Bramme (16) bei ihrem Durchlauf vor dem Brenner (18).

2. Brennschneideverfahren nach Anspruch 1, bei dem die Transportvorrichtung (15) eine Antriebsrolle ist, deren Achse senkrecht zur Transportrichtung der Bramme steht die sie berührt.

3. Brennschneideverfahren nach Anspruch 2, bei welcher das nichtmagnetische Mittel Luft ist.

4. Brennschneideverfahren nach Anspruch 2 oder 3, bei welchem die Antriebsrollen (15) magnetisiert sind.

5. Brennschneideverfahren nach Anspruch 2 oder 3, bei welchem die Antriebsrollen (15) Elektromagnete sind.

6. Brennschneidevorrichtung zur Durchführung des Verfahrens nach Anspruch 1, mit einer Tragstruktur (10) für die Bramme (16) und mindestens einem Schneidbrenner (18), **gekennzeichnet durch** ein oder mehrere Elektromagnete (14), welche an der Tragstruktur (10) befestigt und in der Transportrichtung der Bramme (16) ausgerichtet ist, um die Bramme über dem Boden aufzuhängen, eine oder mehrere Antriebsrollen (15), welche in Transportrichtung der Brammen (16) mit ihren Achsen senkrecht zur Transportrichtung liegen, um mit der Bramme in Berührung zu treten und sie am Schneidbrenner (18) vorbeizuführen, und einem nicht magnetischen Mittel an jedem Elektromagneten (14), welches dazu bestimmt ist, um eine gewisse Distanz zwischen dem Elektromagneten (14) und der Bramme (16) zu halten.

7. Vorrichtung nach Anspruch 6 mit einer Entgratungseinrichtung (19) gegenüber dem Brennschneidebrenner (18), wobei die Bramme (16) beim Schneidbrennvorgang zwischen der Entgratungseinrichtung und dem Schneidbrenner (18) angeordnet ist.

8. Vorrichtung nach Anspruch 6 oder 7 mit einer Schlackengranulierungseinrichtung (19) gegenüber dem Schneidbrenner (18), wobei die Bramme (16) während des Brennschneidevorgangs zwischen der Granulierungseinrichtung und dem Schneidbrenner (18) angeordnet ist.

9. Vorrichtung nach einem der Ansprüche 6 bis 8 mit einer Rauchevakuierungseinrichtung (19) gegenüber dem Schneidbrenner (18), wobei die Bramme (16) beim Brennschneidevorgang zwischen der Evakuierungseinrichtung und dem Schneidbrenner (18) angeordnet ist.

## Claims

1. A process for the oxygen cutting of slabs using one or more oxygen cutting torches, **characterized by** the steps of:
hanging the slab (16) using one or more electromagnets (14) separated from the slab (16) by a non-magnetic means;
inducing relative motion between the cutting torches (18) and the slab (16) using a carrying device (15) acting on the slab (16) on the same side as the electromagnet (14); and
activating the cutting torch (18) to cut the slab (16) as it comes past the cutting torch (18).

2. The cutting process according to claim 1, wherein the carrying device (15) is a motorized roller with its axis perpendicular to the direction of the motion applied to the slab (16).

3. The cutting process according to claim 2, wherein the non-magnetic means is air.

4. The cutting process according to claim 2 or 3, wherein the motorized rollers (15) are magnetized.

5. The process according to claim 2 or 3 wherein the motorized rollers (15) are electromagnets.

6. An oxygen cutting device for implementing the process of claim 1 comprising a slab carrying structure (10) and at least one oxygen cutting torch (18), **characterized by** one or more electromagnets (14) attached to said carrying structure (10) and aligned in the moving direction of the slab (16) to suspend a slab (16) above the ground, one or more motorized rollers (15) arranged in the direction of the slabs' transportation with their axis perpendicular to the direction of transport, to make contact with the slab (16) so as to move said slab in front of the cutting torch (18) and a non-magnetic means adjacent to each of the electromagnets (14) and designed to maintain a certain distance between the electromagnet (14) and a slab (16).

7. The device according to claim 6, including a deburring device facing the oxygen cutting torch (18); the slab (16) being positioned, during the oxygen cutting process, between said deburring device and said cutting torch (18).

8. The device according to claim 6 or 7, including a slag-granulating device (19) facing the oxygen cutting torch (18); the slab (16) being positioned, during the oxygen cutting process, between the slag-granulator and the cutting torch (18).

9. The device according to one of the claims 6 to 8, including a smoke-evacuating device (19) facing the oxygen cutting torch (18); the slab being positioned, during the oxygen cutting process, between said evacuation device (19) and said cutting torch (18).
